Europäisches Patentamt

European Patent Office

Office européen des brevets

(19)

(11) Publication number: **0 296 868**
**A2**

(12) **EUROPEAN PATENT APPLICATION**

(21) Application number: **88305765.5**

(22) Date of filing: **24.06.88**

(51) Int. Cl.4 **B29C 61/06 , H02G 15/18**

(30) Priority: **25.06.87 GB 8714906**

(43) Date of publication of application:
**28.12.88 Bulletin 88/52**

(84) Designated Contracting States:
**AT BE CH DE ES FR GB IT LI NL SE**

(71) Applicant: **N.V. RAYCHEM S.A.**
**Diestsesteenweg 692**
**B-3200 Kessel-lo(BE)**

(72) Inventor: **Decneut, Albert**
**Jachthuislaan 6**
**B-3202 Linden(BE)**

(74) Representative: **Benson, John Everett et al**
**Raychem Limited Intellectual Property Law**
**Department Swan House 37-39, High Holborn**
**London WC1(GB)**

(54) **Recoverable article.**

(57) A recoverable article such as a heat-shrinkable
sleeve for forming a cable splice case has zones of
different recovery stress, particularly at its ends, and
an internal coating of a heat-softenable adhesive.
The zones result in the displacement of adhesive on
heat-installation to produce annuli of adhesive of
increased thickness.

FIG.4

EP 0 296 868 A2

# RECOVERABLE ARTICLE

The present invention relates to heat-recoverable sleeves, preferably for environmental protection of substrates, such as cable splices. More particularly, the invention relates to a technique that allows excellent bonding between such a sleeve and the underlying substrate.

Dimensionally - recoverable articles (particularly heat-recoverable articles) are well known especially in the cable and pipe accessories arts for providing environmental protection, including electrical insulation. A problem to overcome in providing such protection is the desire for easy installation (which requires a loose fit between the protecting article and substrate) and tight engagement after installation to avoid leak paths from the environment to the substrate, which could let in water or other contaminants. This problem is overcome by recoverable articles since they may be supplied over-sized, positioned around the substrate and then caused dimensionally to recover, thereby significantly to change their dimensional configuration and tightly to engage the substrate. Dimensional recovery is preferably shrinkage, and it is preferably brought about by heat. The article may be a sleeve (either of the tubular or wrap-around type) which will in general shrink circumferentially to engage a substrate it surrounds.

An example of a wrap-around sleeve for forming a splice case and widely used for environmental protection of cable splices is that marketed under the Raychem Trade Mark "VASM". Such sleeves have an internal coating of a hot-melt adhesive.

Recently an innovative fabric sleeve for cable splice protection has been developed, comprising a dimensionally - recoverable fabric embedded in a matrix. Such a sleeve is disclosed and claimed in EP-A-0116393 (Raychem) and EP-A-0116391 (Raychem). EP-A-0116390 (Raychem) discloses as particular embodiments a further development in which different zones of fabric have different recovery ratios or stresses etc., to correspond to the shape of the splice or other substrate it is to cover.

Although other techniques for heating may be employed in the above cases, it is common in practice to use an open flame torch. Under unfavourable conditions and when dealing with poor quality cables, however, some cable damage may occur when using a torch. Sometimes, therefore, the cables are wrapped with a protective layer comprising a metal foil and an adhesive, which adhesive may supplement an adhesive on the sleeve, onto which the sleeve shrinks. Such additional adhesive may, however, be costly. In other circumstances, for example when forming a splice case around pressurized cables, a similar cable wrap comprising an adhesive may be desirable to reinforce a bond between the sleeve and the cable. Such a cable wrap may be V-shaped in cross-section allowing it to open out in response to pressure within the spice case; thus, the bond between the cable and sleeve is not put in peel by the internal pressure. Such a cable wrap, known in the art as a V-seal, is disclosed and claimed in EP-A-0148785.

Under difficult installation conditions it may be disadvantageous for the cable wrap to lie initially against the cable. The reason is that heat directed against the unshrunk, and still oversized, sleeve will not greatly heat the cable wrap. It is only in the last stages of shrinkage that the cable wrap receives heat, by thermal conduction through the now touching sleeve.

I have now discovered that automatic displacement of a sealing material on shrinkage of a sleeve can lead to localized build-up of sealing material which can (if desired) obviate the need for seperate cable wraps. The localized build-up preferably has the configuration of one or more annuli at least partly around each cable entering the splice region. It may allow a reduction of the total amount of sealing material required.

Thus, the invention provides an article suitable for environmentally protecting an elongate substrate, which comprises:

(a) a heat-recoverable sleeve having at least two adjacent zones, preferably annular with respect to the sleeve, of different recovery stress;

(b) a heat-softenable sealing material on a surface of the sleeve that will face the substrate when in use and at least at the two zones; the zones being such that when the sleeve is heat-recovered into engagement with the substrate, heat-softened sealing material is displaced from the zone of higher recovery stress to the zone of lower recovery stress.

The invention also provides a method of sealing a cable splice, which comprises positioning around the splice an article of the invention, and applying heat to cause recovery of the sleeve and softening and displacement of the sealing material.

The zoning of recovery stress may cause the sleeve (over all or part of its surface) to adopt an undulating or wavelike configuration, the troughs beng zones of higher recovery force and the peaks zones of lower force. The wave direction (ie what would be known as the direction of propagation if the waves were moving) is preferably substantially axial with respect to the sleeve. The waves preferably extend substantially entirely around the circumference of the sleeve. Since a wavy sleeve has a greater surface length than a corresponding sleeve of the same overall length, the formation of the waves will bring about some tension in any fibres of the sleeve that lie axially (or have an axial component) with respect to the sleeve. Thus, the installed sleeve may be pre-stressed thus improving its strength, particularly its ability to resist an internal pressure. Also, this accomodation of sleeve length into the waves may prevent the formation of irregular wrinkles. Such irregular wrinkles, which may otherwise form due to irrgular shrinkage around the circumference, may be relatively sharp and be burnt by an open flame used to shrink the sleeve.

Branched cable splices (as opposed to simple in-line splices between two cables) often have to be sealed, and a problem arises in the use of hat-shrink sleeves: a sleeve simply shrunk over two branching cables would not follow their combined reentrant, or concave, surface, leaving leak paths at the crutch region into the resulting cable splice. This problem is overcome by the use of a branch-off clip, as disclosed and claimed in GB 1604981. The use of thick cable wraps may, however, make the installation of such a clip inconvenient, and we have discovered that the zoning of the present invention is particularly advantageous in those cases where a clip is to be used.

Particularly good results may be obtained by using a special clip, within the general type claimed in GB 1604981. The feature of interest here is one that facilitates or allows or retains a localization of sealing material, and in particular one that facilitates or allows the displacement of sealing material referred to above. In general this feature may comprise contouring of one or more legs of the clip, and its function may be explained thus. If a sleeve of the invention (having zoning of recovery stress) were shrunk around a single cable sealing material may become localized by displacement from the zones of higher recovery stress to those of lower stress. The result is adhesive build-up having the configuration of annuli around the cable. The situation is relatively simple. If, however, a sleeve is shrunk around two cables with a branch-off clip used between them, it may be difficult for substantially complete annuli to be formed in those regions where the sleeve passes between the legs of the clip, due to the restriction on displacement of adhesive or due to excessive squeezing-out of adhesive. A solution is to provide contouring on the legs of the clip, which may or may not correspond in wave-length and/or phase to the zones of the sleeve. The correspondence need not be exact since each annulus that is desired need not lie in a single plane. It may be desirable that the wave-lengths of the clip and sleeve differ because, in that case, it will be impossible for all waves of the clip to be in phase with those of the sleeve. Clearly it is desirable for there to be at least one trough of the clip aligned with a trough of the sleeve in order that good adhesive build up can occur. In addition to such contouring helping to allow the annuli to be formed in the sleeve as it passes the legs of the clip, it may be desirable to provide for localization of sealing material between the cables. A clip is then used having a inner leg whose purpose is to deliver sealing material between the cables. That inner leg may have a variation along its length in its thickness in the plane of the outer legs.

The present invention also provides a branch-off clip having at least two outer legs and at least one inner leg substantially coplanar with the outer legs, and that can be positioned at an end of a dimensionally-recoverable sleeve with the outer legs outside the sleeve and the inner leg inside the sleeve so as to form at least two conduits in the sleeve, the inner leg having a variation along its length in its thickness in the plane of the outer legs.

The present invention also provides a kit-of-parts which comprises the article of the invention and at least one branch-off clip, preferably a clip having the features mentioned above.

The zoning that is provided by the present invention may be contrasted with the particular embodiments of zoning dislosed in EP-A-0116390 mentioned above, where long range zones are provided corresponding to the shape of the cable splice. For example, a recoverable sleeve may have a central portion of low recovery ratio corresponding to a central splice zone of large diameter, and end portions of higher recovery ratio corresponding to in-going and out-going cables of smaller diameter.

For the sake of completeness, other instances of variation of properties or shaping across a fabric or other surface may be mentioned. US 3044497 (Rebut) discloses an aortic prosthesis comprising a woven tube having circumenferential shrinkable threads spaced along its length. On recovery these threads induce corrugations in the tube, which give the tube strength.

US 2474375 (Sheaver) discloses a protective jacket for articles such as cups, vases or flower pots. The jacket is made by weaving or knitting from fibres having different extents of shrinkage.

US 3526683 (Heslop) discloses a method of forming a heat-recoverable article having different degrees of heat-recoverability in different parts of the article by cross-linking a portion of the article in its heat-recoverable state, thereby locking-in the stress produced in forming said heat-recoverable state, and distorting the article to a new heat-recoverable state.

EP-A-0079245 (Raychem) discloses a recoverable sleeve and a branch-off clip for forming, for example, a cable splice case around branching cables. The sleeve has a reservoir containing an adhesive, and on recovery the reservoir disappears causing the adhesve to be displaced into the crutch region between the branching cables.

The sleeve employed in the present invention preferably comprises recoverable fibres, which includes tapes and multifilament bundles and staple fibres and wires, by virtue of which it is recoverable. Thus, the sleeve may comprise a recoverable fabric, optionally with a matrix material to which it is attached or in which it is embedded, or it may comprise a composite material having merely uniaxially arranged recoverable fibres. It may be desired that the fabric be shrinkable in one direction only, and in this case it may comprise a woven fabric having a warp or weft of recoverable fibres and a weft or warp, as the case may be, of non-recoverable fibres. Such non-recoverable fibres may serve merely to hold together the recoverable fibres, or they may impart strength to the final product. Preferably such non-recoverable fibres comprise glass, particularly multi-filament bundles of glass. In another embodiment the fabric may be knitted, optionally with recoverable fibres inserted into the knit, for example a weft inserted warp knit may be used.

In a preferred embodiment the heat-recoverable sleeve comprises a composite structure of a heat-recoverable fabric and a polymer matrix material wherein:

(a) the heat-recoverable fabric comprises fibres that will recover when heated, the fibres having a recovery stress Y of at least $5 \times 10^{-2}$ MPa at a temperature above their recovery temperature; and

(b) the polymer matrix material has an elongation/temperature profile such that there exists a temperature (T) which is at or above the recovery temperature of the fibres, at which temperature the polymer matrix material has an elongation to break of greater than 20% and a 20% secant modulus X of at least $10^{-2}$ MPa (measured at a strain rate of 300% per minute), and at which temperature the inequality (1) is satisfied:

$$\frac{X}{Y} \cdot \frac{1-R}{R} \text{ is less than 1} \qquad (1)$$

wherein R is the mean effective volume fraction of heat-recoverable fibres in the composite structure along a given direction based on the total volume of the composite structure, or relevant portion thereof.

Preferably $\frac{X}{Y} \cdot \frac{1-R}{R}$ is less than 0.5, more preferably less than 0.05.

The heat-recoverable fibres may have a minimum recovery stress of $10^{-1}$ MPa, more preferably

$5 \times 10^{-1}$, and usually at least 1 MPa at a temperature above the recovery temperature of the fibres, although lower values will be appropriate for example for thicker fibres.

The fibres are preferably formed of a polymeric material that imparts good physical properties and, in particular good creep resistance to the fibres. Olefin polymers such as polyethylene and ethylene copolymers, polyamides, polyesters, and acrylic polymers are preferred, particularly those that are capable of being cross-linked.

The recovery temperature of the fibres is preferably 60°C or more, most preferably from 80°C to 260°C, for example 120-150°C.

The fibres are preferably cross-linked, and cross-linking may be incorporated into fibre manufacture. The fibre may be extruded, stretched at a temperature below its melting temperature, preferably by an amount of from 500-2000%, and then subjected to irradiation to effect cross-linking. High density polyethylene fibres are preferably irradiated to a dose of 5-35 Megarads, preferably 5-25 megarads, especially 7-18 Megarads. Similar values apply to other materials.

The polymeric matrix, where used, may be a thermoplastic or an elastomer, preferably chemically and physically compatible with the fibres. It is preferably bonded to the fibres. Examples of thermoplastic materials include ethylene/vinyl acetate copolymers, ethylene/ethyl acrylate copolymers, polyethylenes including the linear low, low density and high density grades, polypropylene, polyesters, polyamides, and polyvinylidene fluoride etc. Suitable elastomers include acrylonitrile butadiene styrene block copolymers, acrylic elastomers, polyurethanes and silicones etc. The matrix material may be cross-linked, for example using a dose of 2-7 megarads. The matrix material, incorporating the recoverable fibres, may be irradiated after the fibres it contains have themselves been irradiated. Alternatively, a single irradiation step may be employed. In general the more oriented fibres have a reduced beam response compared to the less oriented matrix polymer; this can be compensated for in a single irradiation technique if necessary by adding prorads to the fibres and/or antirads to the matrix.

Such a fabric may if desired be laminated to a strenghtening layer. The strenghtening layer may improve the ability of the article to maintain pressure and the ability of the article to resist adhesive burst-through on recovery of the fabric, it may provide a barrier to moisture vapour, and it may reduce creep when the article is under stress. Its thickness is preferably 5-100 microns, more preferably 7-35 microns.

These features have a number of consequential advantages. In particular, they enable fabric designs to be used that are more open i.e. have a smaller weave density than designed we have hitherto thought desirable.

In one embodiment, the strenghtening layer comprises a metal foil, preferably sufficiently thin that it does not buckle appreciably on recoverly, but rather adopts a configuration of regular peaks and troughs. The flow temperature of the layer if preferably at least 40°C higher than the recovery temperature of the fabric.

The recovery ratio of the sleeve is preferably at least 40%, particularly at least 50%, more particularly at least 65%, the change in a dimension being expressed as a percentage of the dimension before recovery.

Recovery is preferably circumferential with respect to the sleeve, and preferably only circumferential. Thus, recoverable fibres may run circumferentially, and dimensionally non-recoverable fibres may run axially.

The heat-softenable sealing material may comprise an adhesive or a sealant such as a mastic, or a gel (generally regarded as a material having a cone penetration from 100 to 350 $(10^{-1})$mm, and an ultimate elongation of at least 200%, see EP 108518). The sealing material is preferably an adhesive, particularly a hot-melt adhesive. Its softening point is preferably in the range 80-120°C, preferably 95-110°C, and is preferably from 0-30°C, more preferably 5-20°C below the recovery temperature of the fabric. The adhesive preferably has a viscosity in the range 20-150, more preferably 50-80 Pas at 160°C. Preferred hot-melt adhesives are those based on polyamides or on ethylene vinyl acetates. A preferred polyamide adhesive, disclosed in GB 2075991 contains up to 10%, preferably up to 1%, acrylic rubber, and exhibits excellent adhesion to untreated polyethylene.

The different recovery stresses between the two zones may be achieved in any one or more of a variety of ways. For example it may result from a variation in packing (for example weave) density: a zone having a higher density of recoverable fibres will have a higher recovery stress. It may result from a variation in fibre type; for example fibres in the two zones may differ in chemical type, extent of molecular orientation due for example to different extents of stretching, or may differ in extent of cross-linking or other treatment that results in different fibres exibiting difference recovery stress. A third possibility is a variation between the zones in something that tends to impede recovery, for example modulus of a matrix material or presence of non- or less recoverable fibres. A further possibility is to employ fibres of different size in the two zones. Yet another possibility is to employ different weave (or knit etc) designs in the two zones.

The difference in recovery stress between a first zone of lower stress and a second zone of higher stress should be sufficient to displace sufficient sealing material from the second zone to the first zone. I prefer that before recovery, the sealing material is present at substantially uniform thickness across the two zones, preferably across substanially all of the sleeve (although adhesive thickness may be less in the region of sleeve closure). Preferably the difference in recovery stress is sufficient to cause adhesive thickness at the first zone to exceed the thickness at the second zone by at least 0.1, preferably by 0.3 mm. The difference in recovery stress per cm zone length in the two zones in preferably at least 0.1 N per cm, more preferably at least 0.5 N per cm.

I prefer that each zone (reckoned as that which produces a peak or a trough, ie half a wavelength) extends across from 0.25-5, preferably 0.5-3 cms. A zone of higher stress is preferably provided adjacent a zone of lower stress on the side of the zone of lower stress closer to any adjacent open end of the sleeve. This will prevent sealing material being squirted out of that open end. I further prefer that a zone of lower recovery stress is bordered on each of two opposing sides by a zone of higher recovery stress. The two zones of higher recovery stress are thus able to trap displaced sealing material between them. Furthermore, I prefer that per 10 cm sleeve length at least two, preferable 3-9 zones of lower stress be provided alternating with at least three, preferably 4-10 zones of higher force.

This feature of trapping sealing material is particularly useful, especially when used with larger diameter sleeves (for example those for use around cables of diameter 75mm and more) since there the recovery stress is larger.

The zones are preferably annular with respect to the sleeve so that, when the sleeve is recovered into engagement with a cable or other substrate, an annulus of displaced sealing material is formed around the cable. Thus, an excellent bond is formed between the sleeve and the cable. The zoning may if desired be provided only at end portions of the sleeve, although it may be provided along its entire length which may simplify manufacture since a long sleeve can then be cut to the desired length at any position.

Where the sleeve comprises a recoverable fabric, and the zoning results from a variation in packing density (in the sleeve before installation) of recoverable fibres, we prefer that the zone of higher stress has 10-40 fibres per cm and the zone of lower stress has 5-20 fibres per cm, depending on fibre diameter. The difference between the two zones is preferably 5-30 fibres per cm. The packing density or other variable, such as fibre diameter, may be uniform within each zone, or it may vary across each zone such that there is no abrupt change from one zone to another. In that latter case, the variable may vary gradually along the sleeve in a cyclical fashion such that the precise dividing line between zones becomes arbitrary.

The invention is further illustrated with reference to the accompanying drawings, in which:

Figure 1 shows a prior art wrap-around sleeve;

Figures 2 and 3 show a sleeve with zoned recovery stress;

Figure 4 shows a sleeve of the invention after recovery;

Figures 5a and 5b show a prior art branch-off clip;and

Figures 6-8 show a branch-off clip of the invention.

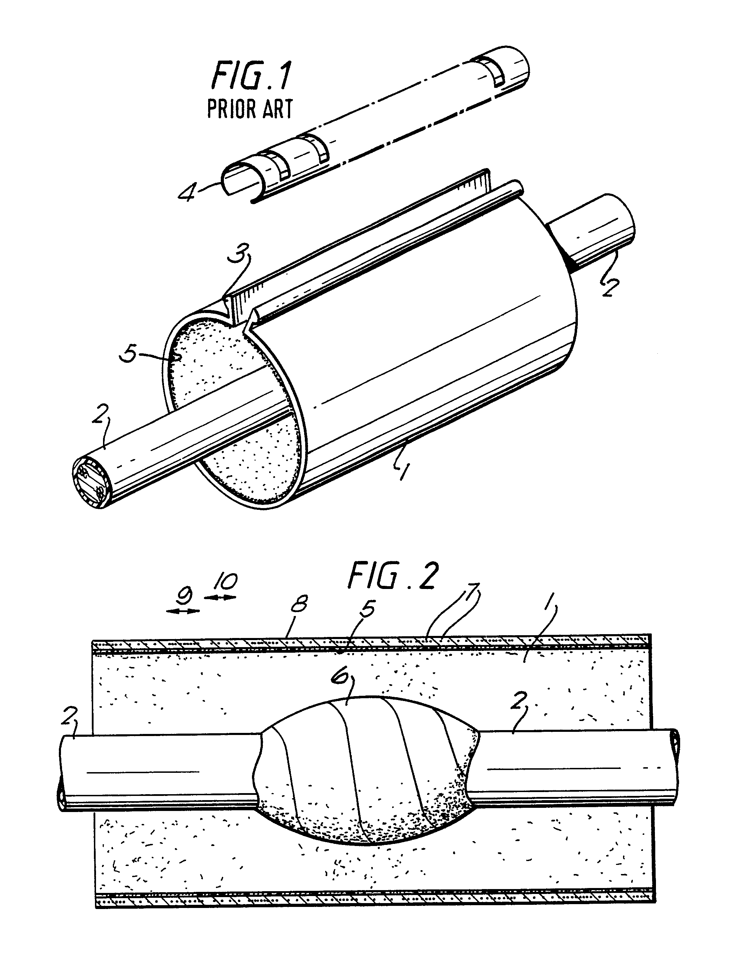

Figure 1 shows a prior art recoverable fabric wrap-around sleeve 1 surrounding a splice between two cables 2 (the splice itself is hidden from view within the sleeve). Opposing longitudinal edge portions of the sleeve bear rails 3 which can be held together by sliding over them a channel 4. The sleeve, which has an internal coating of adhesive 5, is wrapped around the splice, the rails are held together by the channel, and the sleeve is heated by a torch etc, causing it to shrink into engagement with the cables, and causing the adhesive 5 to melt forming a good environmental seal. The sleeve may be provided with a flap, optionally integral, that underlies the rails 3 and bridges them to help form a seal.

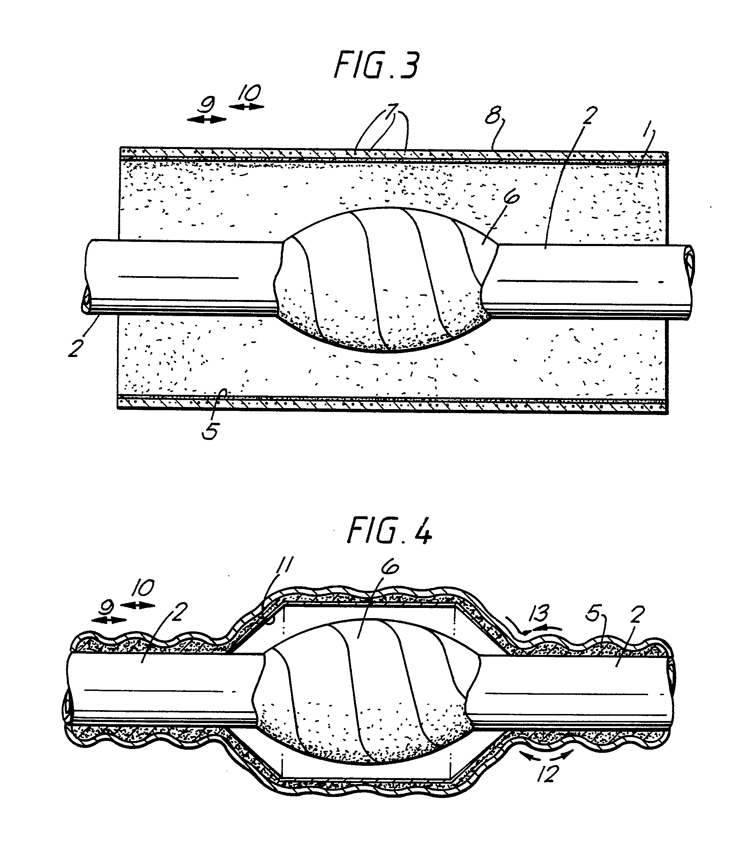

The invention is shown in Figures 2-4. Figure 2 shows in longitudinal cross-section a recoverable fabric sleeve 1, around a splice 6 between two cables 2, for example multi-core telecommunications cables. The sleeve may be a wraparound sleeve of the general configuration illustrated in Figure 1, and it may employ a flap. The sleeve comprises circumferential recoverable fibres 7 and longitudinal dimenionally-stable fibres (not shown). The fibres are embedded in a polymeric matrix 8. As before, the sleeve has an internal coating of an adhesive 5. Zones 9 of higher recovery stress can be seen to alternate with zones 10 of lower recovery stress. In the embodiment illustrated in Figure 2 the zoning is provided by a variation in packing density along the entire length of the sleeve, but it may be restricted to end portions of the sleeve, namely where a good seal to the cables is most important. In Figure 3, zoning is provided by a variation in fibre diameter (which may comprise variation in number of monofilaments in a multifilament bundle). The variations of Figures 2 and 3 could be combined.

Figure 4 shows a sleeve after installation around a cable splice 6 which is additionally protected by a liner 11 having a larger central portion and smaller, preferably tapered, end portions. The resulting structure is known as a cable splice case. The fabric sleeve has zones along its entire length, hence the undulations 12 along its length. The undualations 12 are, however, deeper at the end portions due to the greater extent there of recovery of the sleeve, and the consequentially greater build-up of adhesive. Due to the greater recovery force of zones 9 compared to zones 10, zones 9 have recovered to a greater extent and have displaced adhesive to zones 10. Thus, annuli 13 of adhesive can be seen to have built up around the cable, by displacement as indicated by the arrows. The annuli of adhesive provide a strong bond between the sleeve and the cables, resitant to internal pressure within the splice case. This is due at least in part to peel strength between the sleeve and the cable, and peel strength seems to be greater if the adhesive thickness varies. This finding is most surprising. Measuring from one end of the sleeve, the peel strength increases as the adhesive thickness increases and then decreases as the adhesive thickness decreases; surprisingly, however, each decrease is not as great as the precedng increase, and thus there is a stepped overall increase in peel strength with each wave-length.

This resistance to pressure is useful when constructing a splice case for pressurized telecommunications cables. It can be seen that the adhesive 5 that goes to make up each annulus 13 is heated, and thereby properly activated, during the entire period of heating of the sleeve. It will be appreciated that this would not be the case if separate cable wraps of adhesive were provided around the cables. In that case they would not be heated until the sleeve had shrunk into contact with them, and the result may be insufficient heating.

The sleeve of the invention can also give its own indication of when sufficient heat has been applied. Since the sleeve may (and generally will) initially lack undulations 12, their appearance due to the displacement of adhesive will indicate that the adhesive has been properly softened. In the case of separate cables wraps of adhesive it is difficult to tell when sufficient heat has been applied to activate them since they are hidden from view by the sleeve.

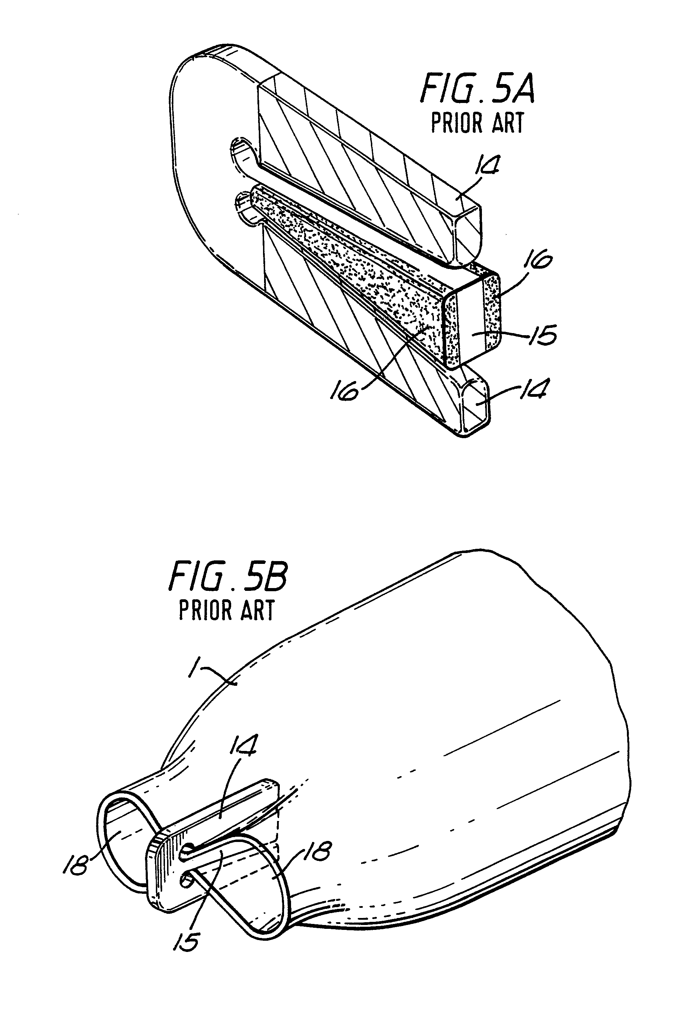

Figure 5a shows a prior art branch-off clip as disclosed and claimed in GB 1604981. It comprises two outer legs 14 and an inner leg 15 having a coating 16 of a sealing material. A recess may be provided at the proximal end of the legs which serves to strengthen the legs and to reduce the liklihood of the sleeve milking-off the sleeve during shrinkage off the sleeve. The circumferentially shrinking sleeve thickens and becomes trapped in recess. The clip of GB 1604981 is said in that specification optionally to be of a simple U-shape (ie to have only two legs) and to have legs having a saw-tooth or sinusoidal surface to resist milk-off.

Figure 5b shows the prior art clip at an end of a sleeve 1, forming therein two heat-shrinkable terminal conduits 18.

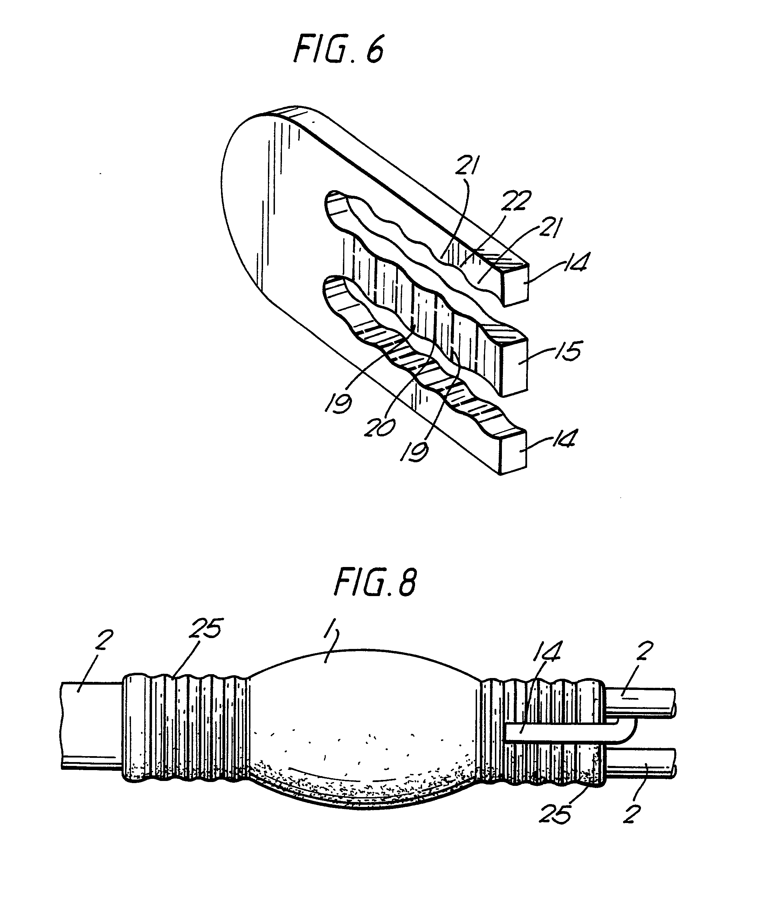

A clip of the invention is shown in Figure 6. Two features can be seen. Firstly, the inner leg 15 is shown having a variation in thickness along its length, shown as portions 19 of greater thickness and portion 20 of less thickness. The variation can be seen to be in the plane of the outer legs 14. Secondly, the outer legs 14 have an optional contoured surface such that the gap between each outer leg and the inner leg varies along the length of the legs. This variation can be seen as peaks 21 and troughs 22.

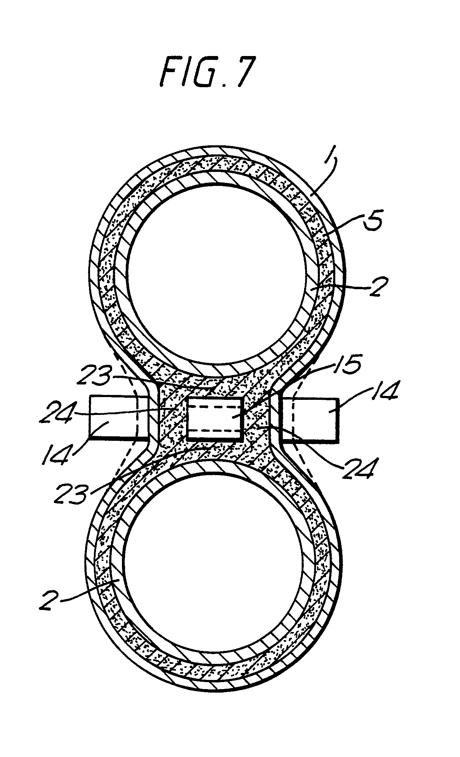

Figure 7, which is a transverse cross-section through an end of a sleeve, clip and cables, shows the way in which the variations in thickness can facilitate or cause the desired build-up of sealing material, especially when the new clip is used in conjunction with the new sleeve.

The cross-section is taken at a position along the length of the clip where the outer legs and the inner legs are of maximum thickness, ie at the peaks of the undulations. The peaks and troughs of any leg need not, but preferably do, coincide with the peaks and troughs of the others. The wavelength of the undulations on the clip may be the same as or different from that of the zones of the sleeve. I have found that it is advantageous if the wavelengths are different since in that case it is likely that at least one trough on the clip will coincide with at least one zone of lower recovery force irrespective of how far the clip is pushed over the end of the sleeve. The regions where a build-up of sealing material is desired are shown as 23 and 24. In the absence of some means for ensuring such a build-up, a sleeve shrinking under great force could under unfavourable conditions squeeze-out sealing material from these regions. The position of the sleeve and the surfaces of the legs a short distance along the clip from that illustrated is shown by dotted lines. It will be appreciated that the contouring of the legs of the clip provides regions in which sealing material may become trapped. The zoning of recovery force of the invention may be the means whereby these regions are supplied with sealing material.

Figure 8 shows a sleeve and clip of the invention after installation. Undulations 25 in the sleeve, caused by the displacement and consequently localized build-up of sealing material, can be seen to run circumferentially around the sleeve, uninterrupted by the clip.

A device similar to such a clip may be used as a heat-pipe capable of heat-activating a sealing material at a branch-off region in a heat-recoverable sleeve, which comprises a first portion that can be positioned within the sleeve, a second portion thermally connected to the first portion and accessible to an open flame when the first portion is within the sleeve; the first portion (a) having a thickness that varies along its length, a thinner region being borded on each side by a thicker region, and (b) having a coating thereon of sealing material.

For the avoidance of doubt it is here indicate that the invention provides a technique and articles for improving a bond between a recoverable sleeve and a substrate such as a cable, or for the elimination of separate cable wraps, or for forming a branch-off seal. This may be done by displacement of sealing material, preferably automatically on recovery. Any of the features disclosed herein, for example materials, fibre types, matrix types, sealing material types, sleeve designs, clip designs etc may be selected.

## Claims

1. An article suitable for environmentally protecting an elongate substrate, which comprises:

(a) a heat-recoverable sleeve having at least two adjacent zones of different recovery stress;

(b) a heat-softenable sealing material on a surface of the sleeve that will face the substrate when in use and at least at the two zones;

the zones being such that when the sleeve is heat-recovered into engagement with the substrate, heat-softened sealing material is displaced from the zone of higher recovery stress to the zone of lower recovery stress.

2. An article according to claim 1, in which the two zones are each circumferential with respect to the sleeve, displacement of sealing material producing an annulus of sealing material around the substrate.

3. An article according to claim 1 or 2, in which the sleeve has at least three zones of different recovery stress, a zone of lower recovery stress being bordered on each of two opposing sides by a zone of higher recovery stress.

4. An article according to claim 1 or 2, in which alternating zones of higher and lower recovery stress extend along substantially the entire length of the sleeve, each zone extending 5 cms or less along the sleeve.

5. An article according to any preceding claim, in which said at least two zones are at an end portion of the sleeve, the zone of higher recovery stress being closer to that end than the zone of lower recovery stress.

6. An article according to claim 5, having such at least two zones at each of two opposing end portions of the sleeve, an intermediate portion of the sleeve between the end portions being of substantially uniform recovery stress.

7. An article according to any preceding claim, in which the sleeve comprises recoverable fibres by virtue of which it is recoverable.

8. An article according to claim 7, in which the sleeve comprises a recoverable fabric.

9. An article according to claim 7, in which the sleeve comprises a recoverable fabric and a polymeric matrix material by virtue of which the fabric is impermeable.

10. An article according to claims 7 to 9, in which the two zones have between them different packing densities of recoverable fibres.

11. An article according to any of claims 7 to 10, in which the two zones have between them recoverable fibres of different thicknesses.

12. An article according to any of claims 7 to 11, in which the two zones have between them fibres of different recovery stress.

13. An article according to any preceding claim, in which the sleeve is provided over substantially all of its surface that will face the substrate when in use with a substantially uniform thickness of said sealing material.

14. A kit of parts which comprise an article according to any preceding claim and at least one branch-off clip.

15. A kit according to claim 14, in which the clip has at least one leg whose surface is contoured to facilitate said displacement of sealing material.

16. A kit according to claim 15, in which contours of the leg of the clip correspond to the zones of the sleeve.

17. A kit according to claim 15, in which contours of the leg of the clip do not correspond to the zones of the sleeve.

18. A branch-off clip having at least two outer legs and at least one inner leg substantially coplanar with the outer legs, and that can be positioned at an end of a dimensionally-recoverable sleeve with the outer legs outside the sleeve and the inner leg inside the sleeve so as to form at least two conduits in the sleeve, the inner leg having a variation along its length in its thickness in the plane of the outer legs.

19. A clip according to claim 18, in which the inner leg has a thicker portion and a thinner portion, the thicker portion being closer to the distal end of the inner leg than the thinner portion.

20. A clip according to claim 19, in which the inner leg has at least two thicker portions alternating with at least one thinner portion.

21. A clip according to claim 18, in which the inner leg has an undulating surface.

22. A clip according to any of claims 18-21, in which the outer legs have a contoured surface such that a gap between each outer leg and an inner leg varies along the length of the outer leg.

23. A clip according to any of claims 18-22, in which the inner leg comprises a sealing material.

24. A kit of parts comprising a dimensionally-recoverable sleeve and a clip according to any of claims 18-23.

25. A kit according to claim 24, in which the sleeve has a coating of a sealing material.

26. A kit according to claim 25, in which the sealing material has zones of greater and lesser thickness which correspond to the variation in thickness of the inner leg.

27. A kit according to claim 25, in which the sleeve has zones of different recovery stress which correspond to the variation in thickness of the inner leg.

28. A kit according to claim 25, in which the sleeve has zones of different recovery stress which do not correspond to the variation in thickness of the inner leg.

29. A heat-pipe capable of heat-activating a sealing material at a branch-off region in a heat-recoverable sleeve, which comprises a first portion that can be positioned within the sleeve, a second portion thermally connected to the first portion and accessible to an open flame when the first portion is within the sleeve; the first portion (a) having a thickness that varies along its length, a thinner region being borded on each side by a thicker region, and (b) having a coating thereon of sealing material.

30. A method of sealing a cable splice, which comprises positioning around the cable splice an article according to any of claims 1-13, and applying heat to cause recovery of the sleeve and softening and displacement of the sealing material.

31. A method of forming a branch-off seal between a heat-recoverable sleeve and at least two cables, which comprises the steps of:

(a) positioning the cables within the heat shrinkable sleeve;

(b) providing a heat-softenable sealing material at a surface of the sleeve;

(c) providing a clip having at least two outer legs at least one leg being contoured;

(d) forming at least two heat-shrinkable terminal conduits by positioning the clip at an end of the sleeve wherein at least two of the legs are positioned externally of the sleeve and the cables are within the terminal conduits;

(e) while the clip remains on the outer surface of the sleeve applying heat to soften the sealing material and to effect shrinkage of the sleeve, the shrinking sleeve adopting a configuration corresponding to the contours of the leg and causing displacement of sealing material into troughs of the contours.

FIG.1
PRIOR ART

FIG.2

## FIG.3

## FIG.4

*FIG.5A*
PRIOR ART

*14*

*16*

*15*

*16*

*14*

*FIG.5B*
PRIOR ART

*1*

*14*

*18*

*18*

*15*

## FIG. 6

## FIG. 8

## FIG.7